# FASCICULE DE BREVET EUROPEEN

(11) **EP 2 569 527 B1**
(45) Date de publication et mention de la délivrance du brevet: **30.04.2014**
(21) Numéro de dépôt: 11725157.9
(22) Date de dépôt: 11.05.2011
(51) Int. Cl.: F02K 1/34, F02K 1/46

(54) **DISPOSITIF POUR ATTENUER LE BRUIT EMIS PAR LE JET D'UN MOTEUR DE PROPULSION D'UN AERONEF**
VORRICHTUNG ZUR REDUZIERUNG DES LÄRMS DER DÜSE EINES FLUGZEUGTRIEBSWERKS
DEVICE FOR REDUCING THE NOISE EMITTED BY THE JET OF AN AIRCRAFT PROPULSION ENGINE

(30) Priorité: 12.05.2010 FR 1053756
(43) Date de publication de la demande: 20.03.2013
(73) Titulaire: Snecma, 75015 Paris (FR)
(72) Inventeur: BODARD, Guillaume, F-77390 Verneuil l'Etang (FR); VUILLEMIN, Alexandre, Alfred, Gaston, F-77300 Fontainebleau (FR)
(74) Mandataire: Gevers France
(86) Numéro de dépôt international: PCT/FR2011/051060
(87) Numéro de publication internationale: WO 2011/141678

(56) Documents cités:
- EP-A1- 1 580 419
- WO-A2-2008/100712
- FR-A1- 2 929 334
- FR-A1- 2 929 336
- US-A1- 2008 078 159

## Description

La présente invention concerne le domaine de la propulsion des aéronefs et vise un dispositif permettant d'atténuer le bruit émis par le jet des moteurs de propulsion, notamment les turboréacteurs, les équipant.

### Description de l'état de la technique

La pollution sonore est aujourd'hui un important sujet d'étude pour les motoristes et avionneurs qui ont comme un de leurs objectifs prioritaires de réduire la nuisance sonore des moteurs de propulsion, notamment les turboréacteurs.

Un turboréacteur est généralement multiflux avec un flux gazeux primaire, chaud et central émis par la partie du moteur formant le générateur de gaz et au moins un flux froid, concentrique au premier et dit flux secondaire. Le générateur de gaz est constitué d'un moteur à turbine à gaz entraînant une soufflante par laquelle l'air est simplement comprimé et est guidé dans un canal dit secondaire concentrique au canal de flux primaire. Les flux peuvent être mélangés immédiatement en aval du générateur de gaz avant d'être éjectés dans l'atmosphère par une tuyère unique ou bien être éjectés séparément par des tuyères concentriques.

Même si les sources de bruit sont intenses et nombreuses, le bruit de jet reste prédominant dans la phase de décollage d'un aéronef où le moteur est à sa puissance maximale. Ce bruit est engendré par les fortes turbulences et les couches de cisaillement créées dans les zones de mélanges de flux ayant des propriétés physiques différentes, telles qu'entre le flux primaire et le flux secondaire ou entre le flux secondaire et l'atmosphère ambiante. Il s'agit d'un bruit à large bande dont l'intensité croît, notamment avec la vitesse d'écoulement du jet. Le bruit de jet a été fortement réduit dans les moteurs modernes avec l'augmentation du taux de dilution par exemple, qui est le rapport entre le flux froid et le flux chaud. Il reste néanmoins encore à réduire.

Pour le diminuer l'un des moyens actuels mis en oeuvre est l'utilisation de dispositifs que l'on désigne chevrons et qui sont installés sur la tuyère du flux
primaire du moteur dans un moteur à flux séparés. Cette solution bien qu'impliquant un effet négatif sur les performances du moteur au décollage et en phase de croisière est appliquée en raison de son efficacité sur l'atténuation du bruit de jet.

L'invention a pour objet la réalisation d'un moyen améliorant l'efficacité du moyen atténuateur de bruit formé par les chevrons tout en ne pénalisant pas les performances du moteur.

On connaît par ailleurs un autre moyen d'atténuation du bruit produit par un jet de gaz à grande vitesse par lequel on accélère son mélange avec le milieu ambiant. Il consiste à produire des jets auxiliaires qui sont séparés du jet principal et répartis le long de la périphérie de celui-ci. Ils sont débités vers l'aval suivant une direction inclinée par rapport à l'axe longitudinal du jet principal avec une composante éventuelle tangentielle. Ce principe était déjà décrit dans le brevet FR 1 195 859 ou encore avec une variante dans le cas d'une tuyère ventilée dans le brevet FR 1 542 668 au nom de SNECMA.

Le brevet EP 1 580 418 décrit un dispositif d'atténuation de bruit pour une tuyère d'un moteur à turbine à gaz pourvue de chevrons sur le bord aval, comprenant un collecteur auquel est reliée une pluralité de tubes à disposition azimutale. Les tubes sont associés aux chevrons et débouchent en aval de leur bord de fuite. Lorsqu'ils sont alimentés par le collecteur, l'air ou un autre gaz est injecté directement dans l'écoulement tourbillonnaire produit en aval de chaque chevron. Cet air permet d'en retarder l'affaiblissement en énergisant le noyau des tourbillons. Il est mentionné §21 qu'un petit jet d'air comprimé est injecté dans les tourbillons et interagit avec ceux-ci pour améliorer le mélange entre le coeur du tourbillon et le flux secondaire d'une part et le flux secondaire et l'air ambiant d'autre part. On retarde ainsi l'affaiblissement du tourbillon et on maintient la cohésion du tourbillon sur une plus longue distance en aval du bord de fuite de la tuyère, ce qui induit une réduction du bruit de jet. Des dispositifs à injection auxiliaire de fluide sont décrits également dans FR 2929336, US 2008/078159 et FR 2929334.

### Exposé de l'invention

La présente invention vise à améliorer la réduction du bruit de jet dans une tuyère d'éjection de gaz pourvue de chevrons le long de la périphérie de son bord aval, l'aval et l'amont étant considéré par rapport à la direction du jet de gaz.

L'invention se rapporte donc à une tuyère d'éjection de gaz, en conformité avec le préambule de la revendication 1.

Ainsi à la différence du brevet EP 1 550 418, on agit en amont de la formation des tourbillons. On injecte l'air en amont du chevron de manière à déclencher l'enroulement tourbillonnaire avant le plan d'éjection. On améliore ainsi le mélange dans la couche de cisaillement. L'intérêt de cette solution est double il permet de mieux organiser le mélange et de réduire les basses fréquences, tout en utilisant les avantages des jets auxiliaires ou microjets qui génèrent moins de pénalités en hautes fréquences que les chevrons seuls.

En outre par rapport à l'enseignement du brevet EP 1 550 418 on peut loger les tubes d'amenée d'air pour former les jets auxiliaires dans l'épaisseur de la tuyère ; ceux-ci ne se prolongeant pas au niveau des chevrons, on n'augmente pas l'encombrement des chevrons, source de pertes aérodynamiques.

Les moyens d'injection de jets auxiliaires débouchant en amont dudit plan amont des chevrons, on permet d'initier l'enroulement des tourbillons de manière plus efficace. Plus particulièrement, les chevrons présentant un plan de symétrie axiale, les moyens d'injection de jets auxiliaires débouchent de part et d'autre dudit plan de symétrie.

Pour rendre optimal l'effet des jets auxiliaires, ceux-ci peuvent présenter l'une ou l'autre des caractéristiques suivantes :
Les jets auxiliaires sont dirigés en direction de l'axe de la tuyère selon un angle compris entre 10 et 50° avec ledit axe.
L'orientation des jets auxiliaires comprend une composante tangentielle.
Les jets auxiliaires répartis le long de la périphérie de la tuyère présentent tous la même direction ou bien présentent de directions différentes. Plus particulièrement les jets auxiliaires, associés à chaque chevron, présentent des directions différentes.
Les chevrons sont de forme sensiblement triangulaire ou trapézoïdale.

L'invention vise notamment un turboréacteur multiflux comprenant au moins un tuyère d'éjection de flux présentant au moins l'une des caractéristiques ci-dessus. Il peut s'agir de la tuyère de flux primaire, de la tuyère de flux secondaire ou bien des deux. L'invention s'applique aussi au mélangeur de flux dans le cas d'un turboréacteur à flux mélangés.

### Brève description des figures

D'autres caractéristiques et avantages de l'invention ressortiront à la lecture de la description qui suit en référence aux dessins annexés sur lesquels :
La figure 1 représente vu en coupe axiale un turboréacteur à double flux auquel s'applique l'invention ;
La figure 2 représente vues de trois quart arrière, les tuyères déjection d'un turboréacteur monté sous aile et comportant le dispositif de l'invention,
La figure 3 montre le détail d'un chevron auquel est associé un moyen d'éjection de jets auxiliaires conforme à l'invention.

### Description d'un mode de réalisation

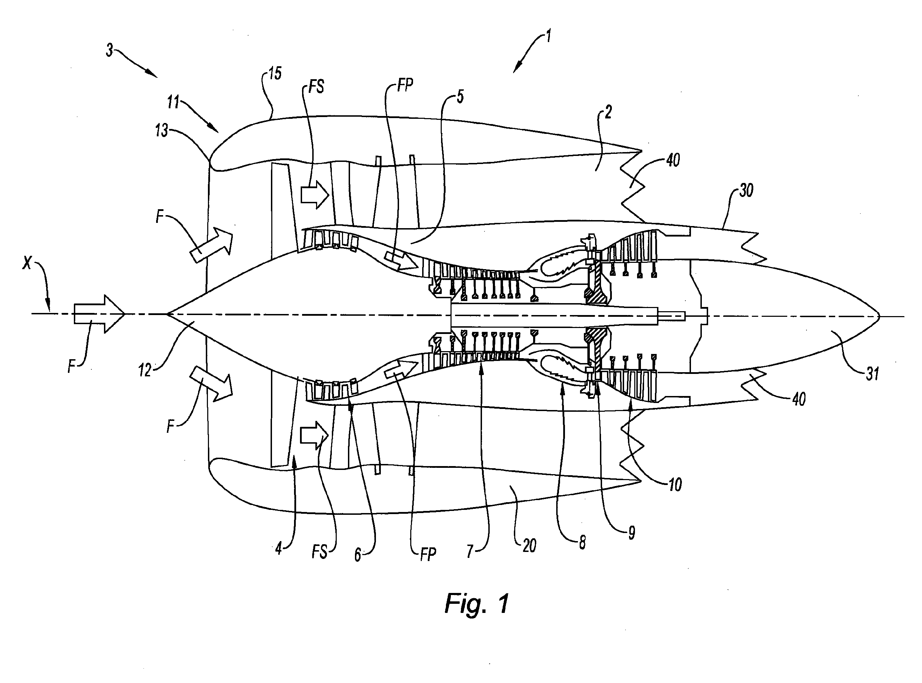

Le turboréacteur 1 de la figure 1 est du type à double-flux et double-corps, présentant une symétrie de révolution autour d'un axe X-X', à éjection à flux séparés. De manière connue, ce turboréacteur 1 comprend, au sein d'une nacelle 2 servant d'enveloppe à ses différents organes, une entrée d'air 3 par laquelle un flux d'air entrant F peut pénétrer pour traverser ensuite une soufflante d'entrée 4. Ce flux d'air F est alors séparé en deux flux respectivement primaire FP et secondaire FS, via un carter intermédiaire 5 dont l'extrémité forme un bec séparateur.

Dans la suite de la description, les termes « amont » et « aval » se rapportent à des positions axiales le long de l'axe longitudinal X-X' dans le sens de l'écoulement du flux d'air dans le turboréacteur 1.

Le flux secondaire FS traverse un étage de redresseur pour ensuite être éjecté en aval du turboréacteur par la tuyère de flux froid ou secondaire, 20. Le flux primaire FP traverse successivement un étage de compression basse pression 6, un étage de compression haute pression 7, une chambre de combustion 8, un étage de turbine haute pression 9 et un étage de turbine basse pression 10, pour, enfin, être éjecté hors du turboréacteur à travers la tuyère de flux primaire 30.

La nacelle 2 de ce turboréacteur est annulaire et disposée coaxialement autour de l'axe longitudinal X-X'. Elle permet de canaliser les flux gazeux générés par le turboréacteur en définissant des lignes d'écoulement aérodynamique internes et externes pour des flux gazeux.

L'entrée d'air 3, dont l'axe est confondu avec l'axe X-X' de révolution de la turbomachine 1, comporte une manche d'entrée d'air 11 ainsi qu'un cône d'entrée d'air 12. Ce dernier permet le guidage aérodynamique et la répartition du flux total F autour de l'axe X-X'.

La tuyère de flux primaire 30 définit avec le cône d'échappement 31 un espace annulaire à travers lequel est éjecté le flux primaire FP.

La tuyère de flux secondaire 20 définit avec la carène du flux primaire un espace annulaire à travers lequel est éjecté le flux secondaire FS.

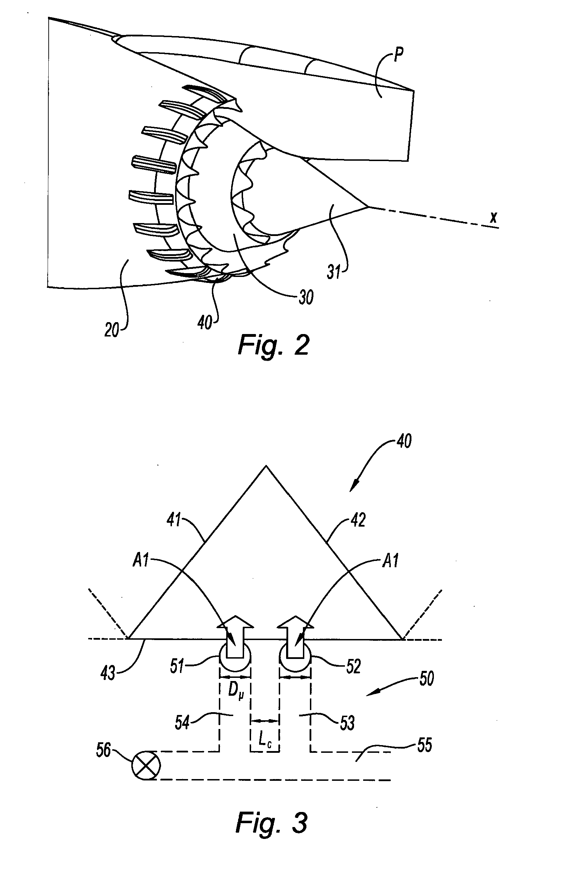

Selon l'exemple illustré par la figure 2, les espaces annulaires sont traversés par le pylône P auquel le moteur est suspendu.

Comme cela est connu, on réduit les bruits de jet en disposant des éléments en forme de panneaux triangulaires ou trapézoïdaux en aval du bord de l'une ou des deux tuyères, ici sur les deux tuyères selon le mode de réalisation de la figure 2. Ces éléments 40 que l'on désigne chevrons sont attachés par leur plus grande largeur à la tuyère et s'étendent entre un plan amont au droit de la section d'éjection de la tuyère et un plan aval ; ils forment de préférence un angle non nuls avec l'axe XX du moteur. Ils sont ici tous de même forme et dimension mais il peuvent également être différents le long de la périphérie des tuyères. Les bords libres des chevrons sont orientés selon des directions convergentes entre le plan amont et le plan aval. Ils sont rectilignes ou bien présentent des parties incurvées. La forme générale du bord de fuite est donc en dents de scie le long de la périphérie de la tuyère. Cet agencement favorise la formation de tourbillons dans la couche de cisaillement entre les flux primaires et secondaires et entre le flux secondaire et l'air ambiant.

On améliore conformément à l'invention l'efficacité des chevrons en initiant l'enroulement des tourbillons en amont par rapport aux bords libres 41 et 42 des chevrons.

On obtient ce résultat en injectant dans le jet principal primaire ou secondaire en amont des bords libres 41 et 42, et plus particulièrement en amont du plan amont 43 des chevrons, des jets de gaz auxiliaires par des moyens d'injection de jets auxiliaires de gaz dans un dispositif 50. On a représenté sur la figure 3 un chevron 40. Il est dans ce mode de réalisation de forme triangulaire solidaire de la tuyère secondaire 20, par son bord situé dans le plan amont 43. La face interne de la tuyère 20, vue depuis l'axe XX, est percée de deux orifices 51 et 52 dans lesquels débouchent des tubes 53 et 54 alimentés en air ou gaz de combustion depuis un collecteur 55. Une partie des tubes courant le long de la carène du flux secondaire est visible sur la figure 2. L'alimentation depuis le collecteur 55 est commandée par une vanne 56. Les deux orifices 51 et 52 sont disposés en amont du plan amont 43 et délivrent, en fonctionnement de l'atténuateur de bruit de jet, des jets auxiliaires A1. Selon ce mode de réalisation représenté les jets sont orientés dans l'axe du jet principal chacun en direction d'un bord. De préférence, ils sont inclinés en direction de l'axe du moteur d'un angle éventuellement égal à celui de l'angle d'inclinaison du chevron auquel ils sont associés. Ils peuvent selon un autre mode de réalisation présenter une orientation différente, être divergents par exemple. Leur écartement ainsi que leur diamètre sont des paramètres à prendre en compte. Il en est de même pour les paramètres thermodynamiques des jets auxiliaires tels que la pression, la température et le débit.

On a représenté sur la figure 3 deux orifices pour la formation de deux jets auxiliaires pour un chevron mais il entre également dans le cadre de l'invention de prévoir un nombre différents de jets auxiliaires et une disposition différente de celle illustrée.

Lorsqu'au décollage de l'aéronef on souhaite mettre en action l'atténuateur de bruit de jet, on commande la vanne 56 mettant le collecteur en communication avec une source d'air au niveau du générateur de gaz notamment. Les jets auxiliaires issus des orifices 51 et 52 vont initier des tourbillons qui par leur position vont être renforcés en passant les bords libres 41 et 42 du chevron. Les tourbillons contrarotatifs ainsi créés en aval du chevron sont plus énergétiques et permettent un meilleur mélange des flux, réduisant le rayonnement en basses fréquences.

## Revendications

1. Tuyère d'éjection de gaz, pour la propulsion d'aéronef, comprenant au moins une partie aval avec un bord de fuite de type dits à chevrons, formée de chevrons (40) répartis le long de la périphérie de la tuyère, s'étendant chacun vers l'aval entre un plan transversal amont (43) et un plan transversal aval avec des bords libres orientés selon deux directions convergentes vers l'aval et définissant ledit bord de fuite, les chevrons assurant la création d'enroulements tourbillonnaires à la frontière du jet émis par la tuyère, **caractérisée par le fait qu'**elle comprend des moyens (50) d'injection de jets auxiliaires de gaz (A1), lesdits jets auxiliaires étant injectés en amont desdits bords libres (41, 42) des chevrons *dans le jet éjecté par la tuyèr à travers des orifices (51, 52) disposés en amont dudit plan amont*, de manière à déboucher en amont dudit plan amont (43) des chevrons, pour initier lesdits enroulements tourbillonnaires en amont des bords libres des chevrons.

2. Tuyère selon la revendication 1 dont les chevrons (40) présentent un plan de symétrie axiale, les moyens d'injection de jets auxiliaires de gaz étant disposés de manière à injecter les jets auxiliaires de part et d'autre dudit plan de symétrie.

3. Tuyère selon l'une des revendications précédentes dont les moyens d'injection de jets auxiliaires de gaz sont disposés de manière à injecter les jets auxiliaires en direction de l'axe de la tuyère selon un angle compris entre 10° et 50° avec ledit axe.

4. Tuyère selon l'une des revendications précédentes comprenant des moyens d'injection de jets auxiliaires de gaz disposés de manière à injecter des jets auxiliaires présentant une composante tangentielle par rapport à l'axe de la tuyère..

5. Tuyère selon l'une des revendications précédentes dont les chevrons sont de forme sensiblement triangulaire ou trapézoïdale.

6. Turboréacteur multiflux comprenant au moins une tuyère d'éjection de flux selon l'une des revendications précédentes.

## Patentansprüche

1. Gasausstoßdüse für den Antrieb eines Luftfahrzeugs, die mindestens einen stromabwärtigen Teil mit einer Hinterkante des sogenannten Typs mit Sparren aufweist, die aus Sparren (40) gebildet ist, die entlang des Umfangs der Düse verteilt sind, die sich jeweils nach stromabwärts zwischen einer stromaufwärtigen Ebene (43) und einer stromabwärtigen Querebene, mit freien Rändern, die entlang von zwei konvergierenden Richtungen nach stromabwärts ausgerichtet sind und die Hinterkante bilden, erstrecken, wobei die Sparren das Schaffen von Wirbelwickeln an der Grenze des von der Düse abgegebenen Strahls sicherstellen, **dadurch gekennzeichnet, dass** sie Mittel (50) zum Einspritzen von Gashilfsstrahlen (A1) aufweist, wobei die Gashilfsstrahlen stromaufwärts der freien Ränder (41, 42) der Sparren in den Strahl eingespritzt werden, der von der Düse durch Öffnungen (51, 52), die stromaufwärts der stromaufwärtigen Ebene angeordnet sind, ausgestoßen wird, so dass er stromaufwärts der stromaufwärtigen Ebene (43) der Sparren mündet, um die Wirbelwickel stromaufwärts der freien Ränder der Sparren einzuleiten.

2. Düse nach Anspruch 1, deren Sparren (40) eine axiale Symmetrieebene aufweisen, wobei die Einspritzmittel von Gashilfsstrahlen derart angeordnet sind, dass die Hilfsstrahlen zu beiden Seiten der Symmetrieebene eingespritzt werden.

3. Düse nach einem der vorhergehenden Ansprüche, deren Einspritzmittel von Gashilfsstrahlen derart angeordnet sind, dass sie die Hilfsstrahlen in Richtung der Achse der Düse entlang eines Winkels, der zwischen 10° und 50° zu der Achse liegt, einspritzen.

4. Düse nach einem der vorhergehenden Ansprüche, die Einspritzmittel für Gashilfsstrahlen aufweist, die derart angeordnet sind, dass Hilfsstrahlen eingespritzt werden, die eine tangentiale Komponente in Bezug zu der Achse der Düse aufweisen.

5. Düse nach einem der vorhergehenden Ansprüche, deren Sparren im Wesentlichen dreieckige oder trapezförmige Form haben.

6. Mehrflutiges Turboluftstrahltriebwerk, das mindestens eine Stromausstoßdüse nach einem der vorhergehenden Ansprüche aufweist.

## Claims

1. A gas exhaust nozzle, notably for aircraft propulsion, comprising at least a downstream part with a trailing edge of so-called chevron type, formed of chevrons (40) distributed along the periphery of the nozzle, each extending downstream between an upstream transverse plan (43) and a downstream transverse plane with free edges oriented in two converging downstream directions and defining said trailing edge, the chevrons generating vortices at the boundary of the jet emitted by the nozzle, **characterized in that** it includes means (50) for injecting auxiliary gas jets (A1), said auxiliary gas jets being injected upstream of said free edges (41, 42) of the chevrons in the main jet through orifices (51, 52) placed upstream said upstream plane in such a way as to discharge upstream of said upstream plane (43) of the chevrons to generate said vortices upstream of the free edges of the chevrons.

2. A nozzle as claimed in claim 1 the chevrons (40) whereof have an axial plane of symmetry, the auxiliary gas jet injection means being disposed in such a way as to inject the auxiliary jets on either side of said plane of symmetry.

3. A nozzle as claimed in any one of the preceding claims the auxiliary gas jet injection means whereof are disposed in such a way as to inject the auxiliary jets in the direction of the axis of the nozzle at an angle between 10° and 50° to said axis.

4. A nozzle as claimed in any one of the preceding claims comprising auxiliary gas jet injection means disposed in such a way as to inject auxiliary jets having a tangential component with regard the nozzle axis.

5. A nozzle as claimed in any one of the preceding claims the chevrons whereof are of substantially triangular or trapezoidal shape.

6. A multiflow turbojet comprising at least one exhaust nozzle according to any one of the preceding claims.
